Europäisches Patentamt

European Patent Office

Office européen des brevets

(11) Veröffentlichungsnummer: **0 459 006 A1**

## (12) EUROPÄISCHE PATENTANMELDUNG

(21) Anmeldenummer: 90110486.9

(22) Anmeldetag: 01.06.90

(51) Int. Cl.5: **F02D 33/02**, F02D 31/00

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Binnewies, Ludwig, Dipl.-Phys.**
**Am Hohen Sand 43**
**W-8417 Lappersdorf(DE)**
Erfinder: **Achleitner, Erwin, Dr.-Ing.**
**Hadamerstrasse 30**
**W-8400 Regensburg(DE)**

(54) **Anordnung zum Steuern des Öffnungsgrads eines Leerlauffüllungsstellers.**

(57) Bei einer Anordnung zum Steuern des Öffnungsgrads (b) eines Leerlauffüllungsstellers (3) sind dessen Steuerwerte abhängig vom Öffnungsgrad (a) einer Drosselklappe (11) und der Drehzahl (n) abgelegt. Dadurch sind Zusatzfunktionen des Leerlauffüllungsstellers (3) außerhalb des Leerlaufdrehzahlregelbereichs ohne zusätzliche Berechnungen möglich, wie z.B. eine Veränderung der Drosselklappenprogression.

FIG 1

Die Erfindung betrifft eine Anordnung zum Steuern des Öffnungsgrads eines Leerlauffüllungsstellers einer Brennkraftmaschine gemäß Oberbegriff von Anspruch 1.

Eine solche Regel- und Steuereinrichtung ist z.B. aus der deutschen Patentschrift 30 48 626 bekannt. Dabei wird über einen Leerlauffüllungssteller im Bypaß zum Luftansaugrohr einer Brennkraftmaschine deren Leerlaufdrehzahl geregelt. Wird der Leerlaufdrehzahlregelbereich verlassen, behält der Leerlauffüllungssteller seinen zuletzt von der Leerlaufdrehzahlregelung eingestellten Öffnungsgrad bei. Bei jedem Schubbetrieb wird dann über den Leerlauffüllungssteller ein minimaler Füllungswert abhängig von der Temperatur und der Drehzahl der Brennkraftmaschine eingeregelt. Die dabei erreichte Endstellung des Öffnungsgrades des Leerlauffüllungsstellers wird jedesmal beibehalten. Dadurch sollen günstige Abgaswerte erreicht und ein Absterben des Motors verhindert werden.

Der vorliegenden Erfindung liegt demgegenüber die Aufgabe zugrunde, ein solches System so auszubilden, daß der Leerlauffüllungssteller in einfacher Weise weitere Funktionen übernehmen kann.

Die erfindungsgemäße Lösung ist im Anspruch 1 gekennzeichnet. Vorteilhafte Weiterbildungen der Erfindung finden sich in den Unteransprüchen.

Gemäß der Erfindung wird der Leerlauffüllungssteller im gesamten Betriebsbereich der Brennkraftmaschine gesteuert. Im Leerlaufdrehzahlregelbereich ist der Steuerung eine zusätzliche Leerlaufdrehzahlregelung übergeordnet. Diese Leerlaufdrehzahlregelung muß daher nur Fehlanpassungen der Steuerung ausgleichen, wozu nur kleine Stelleingriffe notwendig sind.

Gemäß der Erfindung sind die Steuerwerte für die Steuerung abhängig von der Drosselklappenöffnung und der Drehzahl der Brennkraftmaschine abgespeichert. Aus der Drehzahl und der Drosselklappenöffnung sind nämlich die verschiedensten Betriebszustände ablesbar, wodurch eine optimale Anpassung des Öffnungsgrads des Leerlauffüllungsstellers ermöglicht wird.

Darüber hinaus können damit über den Leerlauffüllungssteller zusätzliche Funktionen gesteuert werden, ohne daß dazu zusätzliche Berechnungen oder sogar Regelungen notwendig wären.

Demgemäß kann z.B. die Wirkung der Drosselklappenverstellung beeinflußt werden. Bekanntermaßen tritt etwa beim Beschleunigen aus dem unteren Teillastbereich bei einer linearen Drosselklappenprogression ein unangenehmer Ruck auf. Dies kann jedoch leicht vermieden werden, wenn beim Beschleunigen der Leerlauffüllungssteller in bestimmtem Maße dem Öffnen der Drosselklappe entgegenwirkt. Dadurch kann jede beliebige Progression der Drosselklappenbewegung eingestellt werden. Beim Stand der Technik wären dazu zusätzliche Berechnungen nötig, die die Änderungsgeschwindigkeit der Drosselklappe berücksichtigen. Mit der vorliegenden Erfindung ist damit eine feinere Dosierung der Last bei niederen Drehzahlen möglich.

Bei der vorliegenden Steuerung dagegen kann eine solche beliebige Progression von vornherein abgespeichert werden. Da der Beschleunigungsvorgang von einer bestimmten Drehzahl ausgeht und die Drehzahl sich nicht schlagartig ändern kann, werden für diese Drehzahl für die unterschiedlichen Drosselklappenstellungen direkt die dazu vorgesehenen Steuerwerte für die Progression abgespeichert.

Ein analoges Verfahren wird für den sogenannten Dashpot angewendet. Wenn ausgehend von einer bestimmten Drosselklappenöffnung diese Öffnung schlagartig vermindert wird, kann diesmal durch Öffnen des Leerlauffüllungsstellers ein langsamerer Drehmomentabbau erzielt und damit ein Ruck vermieden werden. Diese Funktion ist genauso wie bei der Drosselklappenprogression ohne jede weitere Berechnung durchführbar.

Eine sogenannte KAT-Schutzkennlinie, die eine Mindestluftmenge während des Schubbetriebs gewährleisten soll, ist ebenfalls direkt über die Drehzahl-Drosselklappenöffnungsabhängigkeit abspeicherbar.

Die Erfindung wird anhand der Figuren näher erläutert. Dabei zeigen:

Figur 1    ein schematisches Blockschaltbild einer Anordnung zum Steuern des Öffnungsgrads eines Leerlauffüllungsstellers und

Figur 2    ein Drosselklappenöffnung-Drehzahlkennfeld zur Erläuterung von abgespeicherten Steuerwerten.

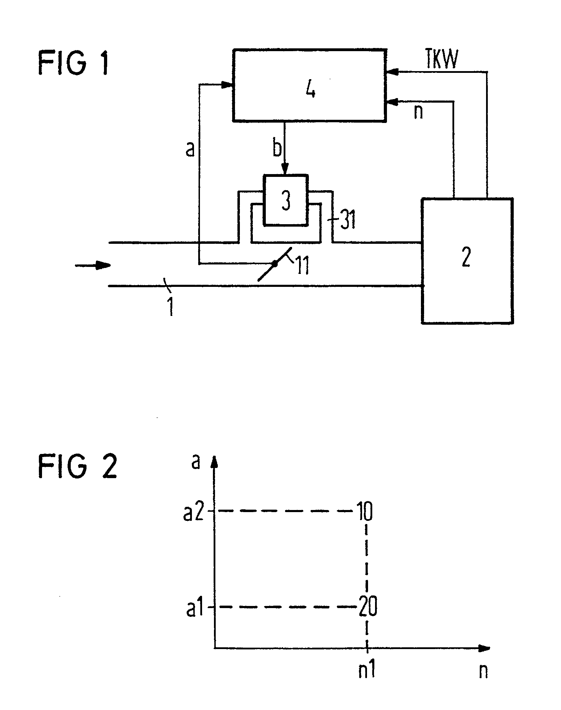

In Figur 1 ist mit 1 ein Saugrohr einer Brennkraftmaschine bezeichnet. Die angesaugte Luftmasse gelangt darüber in der eingezeichneten Pfeilrichtung zum Motor 2. Zur Steuerung dieser Durchflußmenge dient eine Drosselklappe 11, die vom Fahrer gesteuert wird.

Ein Bypaß 31 zum Saugrohr 1, dessen Öffnungsquerschnitt über einen Leerlauffüllungssteller 3 eingestellt wird, überbrückt die Drosselklappe 11.

Ein Mikrocomputer 4 mit entsprechenden Eingangs- und Ausgangsschnittstellen dient als Steuer- und Regeleinrichtung für den Leerlauffüllungssteller 3. Er erhält dazu als Eingangsgrößen den Öffnungsgrad a der Drosselklappe 11, die Drehzahl n sowie die Kühlwassertemperatur TKW. Über seine Ausgangsschnittstelle steuert der Mikrocomputer 4 den Öffnungsgrad b des Leerlauffüllungsstellers 3.

Entsprechende Steuerwerte zum Ansteuern des Leerlauffüllungsstellers 3 sind in dem Mikrocomputer 4 in einem Kennfeld abgelegt. Dieses Kennfeld enthält die Steuerwerte gemäß Figur 2 abhängig von dem Öffnungsgrad a der Drosselklappe 11 und der Drehzahl n. Sie sind für jeden Motortyp individuell auf dem Motorprüfstand und im Versuchsfahrzeug ermittelt.

Unterhalb einer bestimmten Drehzahlschwelle und bei geschlossener Drosselklappe 11 sind die Steuerwerte so gewählt, daß sich eine bestimmte Leerlaufdrehzahl nL ergibt. Zusätzlich wird eine von der Kühlwassertemperatur und dem Betriebszustand (eingelegte Fahrstufe, Klimaanlage usw.) abhängige Korrekturgröße addiert, um eine möglichst gute Vorsteuerung zu erhalten. In diesem Bereich ist der Steuerung zusätzlich eine Leerlaufdrehzahlregelung überlagert. Deren Funktion wird von dem Mikrocomputer 4 übernommen, wobei die erfaßte Drehzahl n als Istwert und der eingestellte Öffnungsgrad b des Leerlauffüllungsstellers 3 als Stellgröße dienen. Der Sollwert der Leerlaufdrehzahl nL ist in einem weiteren Kennfeld des Mikrocomputers 4 abhängig von der Kühlwassertemperatur TKW abgelegt.

Wird der Leerlaufdrehzahlregelbereich durch Öffnen der Drosselklappe 11 verlassen, wird die überlagerte Leerlaufdrehzahlregelung ausgeschaltet und der Leerlauffüllungssteller 3 ausschließlich über das Kennfeld gemäß Figur 2 gesteuert.

Dabei sind insbesondere drei Kennfeldfunktionen zu unterscheiden:

Bei ruckartigem Gasgeben durch Öffnen der Drosselklappe 11 ist das Kennfeld so abgestimmt, daß der Leerlauffüllungssteller 3 in Schließrichtung bewegt wird. Die durch die Öffnung der Drosselklappe 11 bewirkte Vergrößerung des effektiven Durchlaßquerschnitts für den Luftmassenstrom wird also durch die Verringerung des Öffnungsquerschnitts des Bypasses 31 teilweise wieder kompensiert. Der Leerlauffüllungssteller 3 arbeitet in diesem Betriebszustand also gegen die Wirkung der Drosselklappe 11. Damit wird die Drosselklappenprogression abgemildert. Insbesondere im unteren Teillastbereich kann dadurch der sonst übliche Ruck beim Gasgeben vermieden werden.

In der Figur 2 ist ein Beispiel für diese Veränderung der Drosselklappenprogression eingezeichnet. Dabei ist angenommen, daß bei einer bestimmten Drehzahl nL die Drosselklappe 11 von einem Öffnungsgrad a1 auf einen Öffnungsgrad a2 geöffnet wird. Beim Öffnungsgrad a1 der Drosselklappe 11 entspricht der Steuerwert für den Leerlauffüllungssteller 3 20 % Öffnung. Durch die schnelle Öffnung der Drosselklappe 11 konnte sich die Drehzahl n1 noch nicht ändern, jedoch der Öffnungsgrad b des Leerlauffüllungsstellers 3 wird gemäß dem neuen Öffnungsgrad a2 der Drosselklappe 11 auf 10 % verringert. Durch entsprechende Wahl der Steuerwerte kann damit jede beliebige Drosselklappenprogression eingestellt werden.

Beim umgekehrten Vorgang - also ruckartigem Gaswegnehmen - wirkt das Kennfeld entsprechend in umgekehrter Richtung. Der durch das ruckartige Schließen der Drosselklappe 11 schlagartig verminderte Luftmassenstrom wird dabei über eine entsprechende Öffnung des Leerlauffüllungsstellers 3 abgemildert. Durch eine entsprechende Änderungsbegrenzung für den Öffnungsgrad kann die Geschwindigkeit, mit der die optimale Öffnung des Leerlauffüllungs steller im Schubbetrieb angesteuert wird, beeinflußt werden.

Im Schubbetrieb ist die Drosselklappe 11 vollständig geschlossen und die Drehzahl n liegt oberhalb der Leerlaufdrehzahl nL. Durch den hohen Unterdruck aufgrund der geschlossenen Drosselklappe 11 kann es dabei zu einem nicht brennbarem Gemisch kommen, wodurch im Extremfall ein nachgeschalteter Katalysator durch Überhitzung zerstört werden kann. Aus diesem Grund sind für diesen Betriebsfall die Steuerwerte so gewählt, daß über den Leerlauffüllungssteller 3 eine Mindestluftmenge erhalten bleibt, die ein brennbares Gemisch gewährleistet.

Jede beliebige weitere Funktion des Leerlauffüllungsstellers 3 kann in dem gleichen oder auch in weiteren Kennfeldern realisiert werden.

Bei Ausfall - z.B. Blockade - der Drosselklappe 11 kann etwa deren Funktion in eingeschränktem Maß durch den Leerlauffüllungssteller 3 ersetzt werden. Dieser wird dann über ein spezielles Notlaufkennfeld wie eine Drosselklappe angesteuert. Als Drosselklappenwert muß dazu die Stellung des Fahrpedals verwendet werden.

**Patentansprüche**

1. Anordnung zum Steuern des Öffnungsgrades (b) eines Leerlauffüllungsstellers einer Brennkraftmaschine,
   mit einer Regeleinrichtung, die den Öffnungsgrad (b) des Leerlauffüllungsstellers unter bestimmten Betriebsbedingungen einregelt,
   **dadurch gekennzeichnet,**
   daß eine Steuereinrichtung vorgesehen ist, die den Öffnungsgrad (b) des Leerlauffüllungsstellers (2) im gesamten Betriebsbereich gemäß abgespeicherten Steuerwerten abhängig von der Drosselklappenöffnung (a) und der Drehzahl (n) steuert, und
   daß die Stellsignale der Regeleinrichtung im Leerlaufdrehzahlregelbereich den Steuerwerten der Steuereinrichtung überlagert sind.

2. Regel- und Steuereinrichtung nach Anspruch 1,
   **dadurch gekennzeichnet,**

daß die Steuerwerte so gewählt sind, daß außerhalb des Leerlaufdrehzahlregelbereichs die Wirkung der Drosselklappenverstellung beeinflußt wird.

3. Regel- und Steuereinrichtung nach Anspruch 2,
**dadurch gekennzeichnet,**
daß die Steuerwerte eine Verkleinerung des Öffnungsgrads des Leerlauffüllungsstellers bewirken, wenn sich die Drosselklappenöffnung vergrößert.

4. Regel- und Steuereinrichtung nach Anspruch 2,
**dadurch gekennzeichnet,**
daß die Steuerwerte eine Vergrößerung des Öffnungsgrads des Leerlauffüllungsstellers bewirken, wenn sich die Drosselklappenöffnung verkleinert.

5. Regel- und Steuereinrichtung nach Anspruch 1,
**dadurch gekennzeichnet,**
daß im Schubbetrieb (Drosselklappe geschlossen und Drehzahl über Leerlaufdrehzahl) die Steuerwerte über den Öffnungsgrad des Leerlauffüllungsstellers eine drehzahlabhängige Mindestluftmenge bewirken, um beim Schubabschneiden des Kraftstoffs durch ein eine dadurch bewirkte Unterdruckbegrenzung ein brennbares Gemisch zu gewährleisten.

FIG 1

TKW

4

a

b

n

3

31

2

11

1

FIG 2

a

a2 — — — — — — 10

a1 — — — — — — 20

n1

n

Europäisches
Patentamt

**EUROPÄISCHER**
**RECHERCHENBERICHT**

Nummer der Anmeldung

**EP 90 11 0486**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 052 796  (HITACHI LTD) <br> * Seite 2, Zeilen 12-24; Seite 2, Zeile 119 - Seite 3, Zeile 46; Seite 3, Zeile 107 - Seite 4, Zeile 122; Figuren 1,5,7,9 * | 1,2 | F 02 D 33/02 <br> F 02 D 31/00 |
| Y | | 3-5 | |
| | — — — | | |
| Y | US-A-4 373 501  (RADO) <br> * Spalte 6, Zeilen 12-50 * | 3,4 | |
| | — — — | | |
| Y | GB-A-2 117 936  (HONDA GIKEN K.K.K.) <br> * Seite 1, Zeilen 95-116; Seite 3, Zeilen 20-105 * | 5 | |
| | — — — | | |
| A | GB-A-2 166 890  (FUJI JUKOGYO K.K.) <br> * Seite 1, Zeile 35 - Seite 2, Zeile 24 * | 1,2 | |
| | — — — | | |
| A | EP-A-0 072 578  (MITSUBISHI K.K.) <br> — — — | | |
| A | EP-A-0 153 012  (HONDA GIKEN K.K.K.) <br> — — — — — | | |

**RECHERCHIERTE SACHGEBIETE (Int. Cl.5)**

F 02 D

Der vorliegende Recherchenbericht wurde für alle Patentansprüche erstellt

| Recherchenort | Abschlußdatum der Recherche | Prüfer |
|---|---|---|
| Den Haag | 05 Dezember 90 | MOUALED R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument